# EUROPÄISCHE PATENTSCHRIFT

(11) **EP 0 617 688 B1**
(45) Veröffentlichungstag und Bekanntmachung des Hinweises auf die Patenterteilung: **28.02.1996**
(21) Anmeldenummer: 93917513.9
(22) Anmeldetag: 17.08.1993
(51) Int. Cl.: B65D 90/54, F16J 13/06

(54) **VERSCHLUSS FÜR DRUCKBEHÄLTER**
CLOSURE FOR A PRESSURE VESSEL
BOUCHON DE FERMETURE POUR RECIPIENTS SOUS PRESSION

(30) Priorität: 25.08.1992 CH 2632/92
(43) Veröffentlichungstag der Anmeldung: 05.10.1994
(73) Patentinhaber: BOLLI, Heinz, CH-8184 Bachenbülach (CH); WYSS, Markus, CH-8605 Gutenswil (CH)
(72) Erfinder: BOLLI, Heinz, CH-8184 Bachenbülach (CH); WYSS, Markus, CH-8605 Gutenswil (CH)
(74) Vertreter: Feldmann, Clarence Paul
(86) Internationale Anmeldenummer: CH9300207
(87) Internationale Veröffentlichungsnummer: WO9404443

(56) Entgegenhaltungen:
- EP-A- 0 445 977
- DE-A- 3 516 721
- DE-C- 3 131 173

## Beschreibung

In der chemischen Industrie und in der Verfahrenstechnik generell werden für verschiedene Verfahrensabläufe Druckbehälter unterschiedlicher Grösse und Stärke benötigt in Abhängigkeit von den Mengen, die darin behandelt werden, und von den während der Prozessabläufe auftretenden Drücken. Entsprechend müssen auch die Verschlüsse diesen Verhältnissen angepasst sein.

Verschlüsse für Druckbehälter mit den Merkmalen des Oberbegriffes des Patentanspruches 1 sind bekannt. Meist handelt es sich hierbei um relativ komplexe Schweisskonstruktionen, die, obwohl vorgängig dimensioniert und berechnet, nachträglich noch durch umfangreiche Tests geprüft werden müssen, obwohl eine Typenabnahme besteht. Auch bedingen solche Verschlüsse entsprechend relativ hohe Vearbeitungszeiten, was zu hohen Fertigungskosten führt.

Meist sind die Deckel solcher Verschlüsse, wenn sie schwenkbar am Kragen angelenkt sind, mit einem auf angeschweissten Konsolen montierten Scharnier versehen und schlagen beim Oeffnen des Deckels auf die Behälterwand auf, wodurch Deformationen auftreten können.

Die Klemmorgane, mit denen der Deckel zugedrückt wird, sind meist ortsfest am Kragen angeschweisste und gelenkig fixierte Hebelsysteme, die aufwendig und unvariabel sind. Die Zahl der Klemmorgane lässt sich nicht verändern, auch dann nicht, wenn der Deckel ausgetauscht wird. Meist muss der gesamte Verschluss ausgewechselt werden, wenn dies überhaupt möglich ist.

Es ist folglich die Aufgabe der vorliegenden Erfindung, einen Verschluss für Druckbehälter gemäss Oberbegriff des Patentanspruches zu schaffen, der die genannten Nachteile behebt.

Diese Aufgabe löst ein Verschluss mit den Merkmalen des Patentanspruches 1. Durch die getrennte Ausführung von Deckel und Kragen sowie der Anordnung mehrerer verschieb- und lösbar am Kragen angreifenden Klemmorgane lassen sich verschiedene Deckel unterschiedlicher Stärke mit unterschiedlicher Anzahl von Klemmorganen montieren. Diese Variation des Deckels ist auch möglich, wenn der Kragen ein am Behälter anschweissbarer Ring ist.
Der Kragen lässt sich aber auch als ein auf den Behälter aufschraubbaren Ring gestalten. In diesem Fall ist der Behälter mit einem Flansch versehen, auf dem auswechselbar ein Kragen befestigbar ist. Somit lässt sich dann auch eine gewisse Variation der Kragendurchmesser realisieren.

Weil jeder Deckel für einen bestimmten Druck ausgelegt ist und folglich die korrekte Anzahl Klemmelement haben muss, die an der richtigen Stelle angreifen sollen, ist es vorteilhaft, den Deckel des Verschlusses mit den Merkmalen des Patentanspruches 5 auszugestalten.

Beim Schliessen bekannter Verschlüsse für Druckbehälter kommt es immer wieder vor, dass die Dichtungen eingeklemmt und zerstört werden. Dies kann vermieden werden, wenn der Verschluss zusätzlich gemäss Patentanspruch 5 gestaltet ist.
Werden auch noch die Merkmale gemäss Patentanspruch 6 realisiert, so entspricht der Verschluss den Vorschriften eines Sterilverschlusses. Ein solcher Verschluss kann durch die Ausgestaltung nach Anspruch 7 besonders hoch verdichtet werden.
Die Klemmorgane leiten die Kräfte besonders vorteilhaft in den Kragen ein, wenn die Merkmale gemäss Anspruch 8 realisiert werden.
Damit die Klemmorgane gegen ein ungewolltes Entfernen vom Kragen gesichert und trotzdem aber lösbar sind, empfiehlt sich eine Lösung gemäss Anspruch 9.
Der Deckel kann aber mit dem Kragen des Verschlusses, ohne die Vorteile der Erfindung zu verlieren, über ein Scharnier verbunden sein. Dieses lässt sich aus einem Klemmorgan gemäss Anspruch 8 mit den Merkmalen nach Anspruch 11 realisieren. Zur Erleichterung des Oeffnungsvorganges kann das Scharnier auch die Merkmale des Anspruches 12 aufweisen.
Nachfolgend ist ein Ausführungsbeispiel des Erfindungsgegenstandes anhand der beiliegenden Zeichnungen detailliert beschrieben.
Es zeigt:

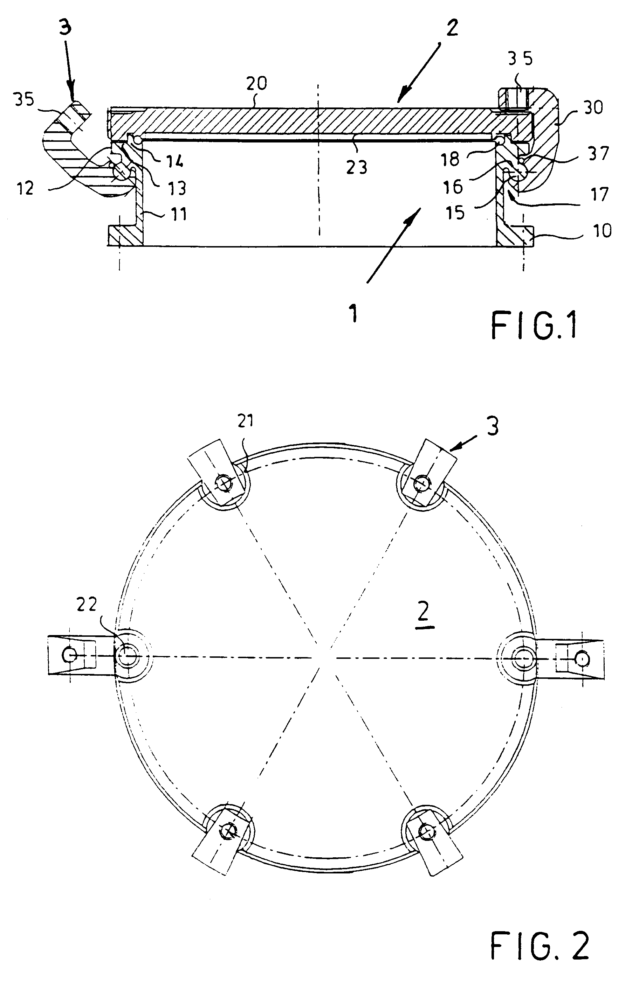

- Figur 1: einen vertikalen Querschnitt durch einen Verschluss mit aufschraubbarem Kragen mit zwei Klemmorganen von denen eines in der offenen und das andere in der geschlossenen Lage gezeigt ist.
- Figur 2: zeigt denselben Verschluss in der Aufsicht mit vier aktiven und zwei inaktiven Klemmorganen.
- Figur 3: zeigt ein Klemmorgan im Schnitt in der geschlossenen und
- Figur 4: in der offenen Position.
- Figur 5: verdeutlicht ebenfalls im Vertikalschnitt die Ausgestaltung des Scharnieres und
- Figur 6: zeigt den halben Verschluss in der Aufsicht, mit teilweise weggeschwenktem Deckel.

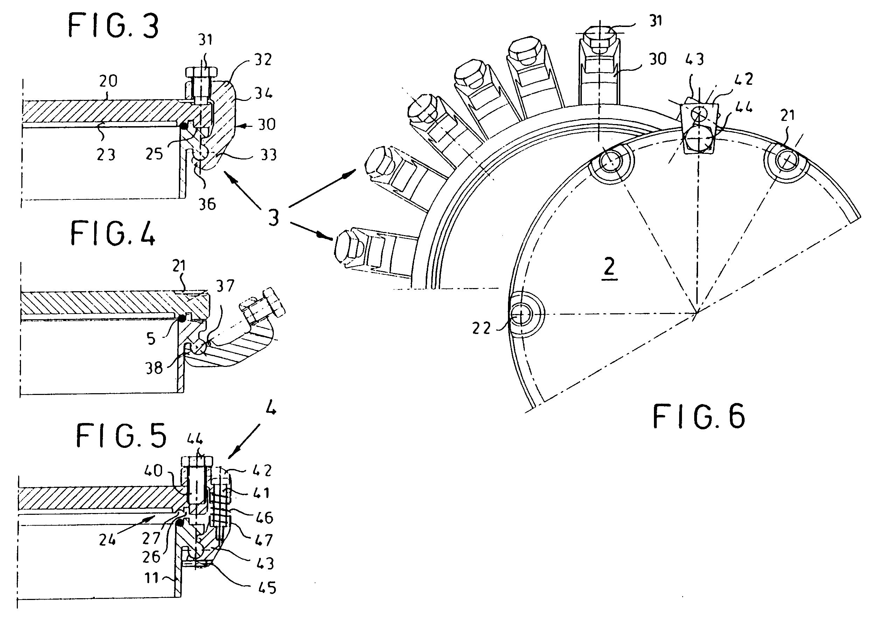

Wie bereits eingangs erwähnt, ist die Gestaltung des Verschlusses keineswegs abhängig von der Gestalt des Druckbehälters. Dies trifft vollständig auf den Deckel 2 zu, während der Kragen 1 je nachdem, stationär am Druckbehälter, das heisst angeschweisst, oder auswechselbar am Druckbehälter befestigt ist. Weist die Oeffnung am Druckbehälter bereits einen Anschlussflansch auf, so kann auch der Kragen 1 des Verschlusses mit einem Befestigungsflansch 10 versehen sein.
Nachfolgend ist vorerst der Kragen 1 im Detail erläutert. Der Kragen besteht, abgesehen von dem je nach Ausführung fakultativen Befestigungsflansch, aus einer zylindrischen Wand 11 mit einem oberen, endständigen Dichtflansch 12.
Dieser hat eine obere, plane Dichtfläche 13. Die Dichtfläche 13 wird aussen vom Flanschrand und innen von einem konzentrischen, ringförmigen Steg 14 begrenzt, der sich über die plane Dichtfläche 13 erhebt. Unten am Dichtflansch 12 ist ein im Querschnitt im wesentlichen kreisförmiger Ringwulst 15 über einen Hals 16 umlaufend angeformt. Die maximale Weite des Halses 16 ist kleiner als der Durchmesser des Querschnittes des Ringwulstes 15. Der Ringwulst 15 ist über den Hals 16 so mit dem Dichtflansch 12 verbunden, dass er mit einem Winkel von cirka 45° von der Horizontalen nach unten und nach aussen gerichtet absteht. So verbleibt zwischen dem Ringwulst 15 und der zylindrischen Wand 11 des Kragens 1 ein umlaufender Hintergriff 17. Schliesslich ist im Bereich zwischen der Innenkante der zylindrischen Wand 11 und dem hierzu konzentrischen Steg 14 eine im Querschnitt halbrunde, ebenfalls umlaufende Nut 18 in der Dichtfläche 13 eingelassen. Die halbrunde Nut dient der Aufnahme eines O-Ringes 5 (siehe Figuren 3-5), welcher die Dichtung zwischen Kragen 1 und Deckel 2 bewirkt.

Der Deckel 2 ist aus einer kreisförmigen, einstückigen Platte gedreht. Dessen Oberfläche 20 ist plan mit Ausnahme von am Umfang gleichmässig verteilten, vertieften Druckflächen 21, die im Durchmesser so gross sind, dass sie vom Rand des Deckels abgeschnitten sind. Zentrisch in den vertieften Druckflächen sind nochmals um cirka 2mm weiter vertiefte, napfförmige Aufnahmen 22 eingelassen, die vollständig im Umfang des Deckels liegen.
Die Deckelunterseite 23 ist im Bereich, der über dem Innenraum des Kragens zu liegen kommt, ebenfalls leicht vertieft, wodurch eine verdickte Randzone 24 entsteht. Diese verdickte Randzone 24 hat zuäusserst wieder eine plane Dicht- und Druckfläche 25, die im geschlossenen Zustand des Verschlusses plan auf der Dichtfläche 13 des Kragens 1 aufliegt. Zum Zentrum hin wird die Dicht- und Druckfläche 25 durch eine Ringnut 26 begrenzt, in die der ringförmige Steg 14 des Kragens formschlüssig passt. Zum Zentrum hin anschliessend an die Ringnut 26 ist in der Dichtfläche 25 wiederum eine mindestens annähernd im Querschnitt halbkreisförmige Aufnahmenut 27 für die O-Ringdichtung 5 eingelassen. Die Ringnut 26 ist geringfügig tiefer als der ringförmige Steg 14 am Kragen hoch ist, damit der Federweg der komprimierten O-Ringdichtung aufgenommen werden kann, ohne dass diese zerquetscht wird. Entsprechend sind die Nut 18 im Kragen 1 und die Ringnut 26 im Deckel 2 so dimensioniert, dass zur Innenseite des Verschlusses im geschlossenen Zustand desselben ein Ringspalt verbleibt. Wenn folglich die Dicht- und Druckflächen von Deckel und Kragen aufeinanderliegen, kann die O-Ringdichtung 5 teilweise in den Ringspalt ausweichen.

Ein derartiger Verschluss gilt gemäss den Normen als Sterilverschluss. Durch die spezielle Gestaltung der Randzone 24 des Deckels und des Dichtflansches 12 des Kragens kann die Dichtung 5 auch dann nicht zerstört werden, wenn der Deckel nicht korrekt auf dem Kragen aufliegt oder aufschlägt. Nur wenn der Steg 14 korrekt in die Ringnut 26 eingreift, kann die Dichtung gequetscht werden.

Der Kragen 1 und der Deckel 2 werden durch mehrere Klemmorgane 3 dichtend zusammengehalten. Die Klemmorgane 3 haben die Form von C-förmigen Klammern 30 mit einer Druckschraube 31. Das Klemmorgan wird somit aus einer C-förmigen Klammer 30 und der Druckschraube 31 gebildet. Die Klammern lassen sich aus einem vollen Ring drehen und müssen danach nur noch in Abschnitte gesägt werden.
Die C-förmigen Klammern 30 haben einen unteren Schenkel 33, einen oberen Schenkel 32 und einen verbindenden Teil 34. Der obere Schenkel 32 steht senkrecht vom verbindenden Teil 34 ab, während der untere Schenkel 33 mit dem verbindenden Teil 34 einen stumpfen Winkel einschliesst.

Während im oberen Schenkel 32 ein mittiges Gewindeloch 35 vorhanden ist, weist der untere Schenkel 33 ein im Querschnitt mindestens annähernd halbkreisförmiges Maul 36 auf. Dieses Maul 36 hat einen gekrümmten Verlauf entsprechend dem Krümmungsradius des Ringwulstes 15, so dass das Maul 36 auf den Ringwulst 15 am Kragen 1 formschlüssig passt.

Durch die Schrägstellung des unteren Schenkels 33 und des Ringwulstes 15 untergreift das Maul 36 den Ringwulst 15. Ferner schneidet die Mittenachse des Gewindeloches 35 im oberen Schenkel das Maul im unteren Schenkel mittig. Dies bewirkt eine optimale Krafteinleitung. Das Maul 36 der C-förmigen Klammer 30 wird auf einer Seite von einem tangentialen Stift 37 begrenzt, welcher im geschlossenen Zustand des Verschlusses am Hals 16 anliegt und das Maul 36 nun geringfügig mehr als 180° schliesst, so dass die C-förmige Klammer 30 lediglich von dem Ringwulst 15 abgenommen werden kann, nachdem der Stift 37 entfernt worden ist. Das Maul 36 weist auf der dem Stift 37 gegenüberliegenden Seite eine Lippe 38 auf.
Diese greift im offenen Zustand des Verschlusses, wenn die Klammer um die Ringwulst 15 nach aussen geschwenkt ist, in den Hintergriff 17 ein, wodurch der Schwenkwinkel der C-förmigen Klammer begrenzt ist.

In einer einfachen Ausführung des Verschlusses lassen sich somit die C-förmigen Klammern, nachdem die Druckschrauben 31 gelöst sind, einfach nach aussen schwenken und der Deckel 2 kann abgehoben werden. Soll ein neuer Deckel für höhere Drücke montiert werden, so hat dieser lediglich eine etwas grössere Dicke und mehr Druckflächen 21 an den Umfang verteilt angeordnet, kann aber mit denselben C-förmigen Klammern gehalten werden. Entweder setzt man somit auf den Ringwulst noch weitere Klammern auf, oder man verwendet gegebenenfalls bereits montierte, vorher überzählige Klammern.
Die überzähligen Klammern sind beim Schliessen nicht hinderlich. Die Konstruktion lässt auch zu, die Klammern immer an jeden gewünschten Ort zu verschieben. Dies ist besonders vorteilhaft, wenn Kragen 1 und Deckel 2 über ein Schwenkscharnier 4 miteinander in Verbindung stehen, wie dies die Figuren 5 und 6 zeigen.
Zur Bildung des Verschlusses mit Schwenkscharnier braucht es lediglich am Deckel 2 eine Sacklochbohrung 40 mit Innengewinde. Das eigentliche Schwenkscharnier 4 wird aus einer modifizierten, C-förmigen Klammer gebildet. Die entsprechend identischen Elemente werden folglich nicht nochmals beschrieben. Der verbindende Teil der C-förmigen Klammer ist senkrecht zu seiner Verlaufsrichtung durchgetrennt. Die Achse 41 des Scharnieres 4 wird von einer Passschraube gebildet, die somit die beiden Klammerteile zusammenhält.
Der obere Klammerteil 42 wird somit von der Passschraube 41 vollständig durchsetzt und ist durch die Halteschraube 44 fix mit dem Deckel 2 verbunden, während die Passschraube 41 im unteren Klammerteil 43 eingeschraubt ist und dieser Teil 43 sich fix auf dem Ringwulst 15 hält. Ein Stützbolzen 45 durchsetzt den unteren Klammerteil 43 und stützt sich auf der Wand 11 des Kragens 1 ab.
Zwischen dem oberen und unteren Klammerteil des Scharnieres 4 ist eine Druckfeder 46 angeordnet, die von der Passschraube 41 stützend durchsetzt wird. Die Enden der Druckfeder 46 sind in entsprechenden Ausnehmungen 47 in den beiden Klammerteilen, die die Scharnierhälften bilden, gehalten.

Ist der Verschluss in der letztbeschriebenen Form gestaltet, so kann der Deckel 2, nachdem die Druckschrauben 31 gelöst, die Klemmorgane nach aussen geschwenkt und alle auf eine Seite des Scharnieres 4 zusammengeschoben sind, zur Seite gedreht werden, wie dies Figur 6 zeigt.

Die konstruktive Gestaltung des Verschlusses ist so einfach gehalten, dass der gesamte Verschluss allein aus Drehteilen rationell gefertigt werden kann und somit, neben den bereits eingangs erwähnten Vorteilen, auch noch äusserst preiswert herstellbar ist.

## Patentansprüche

1. Verschluss für Druckbehälter, bestehend aus einem mit dem Druckbehälter verbindbaren Kragen (1) und einem Deckel (2) sowie einer im Auflagebereich zwischen Deckel und Kragen angeordneten Dichtung (5) und mehreren Klemmorganen (3) zur Erzeugung des Flächendruckes zwischen Kragen und Deckel, dadurch gekennzeichnet, dass am Kragen ein Dichtflansch (12) einstückig angeformt ist, der eine obere, plane Dichtfläche (13) und einen unteren, umlaufenden, im Querschnitt mindestens teilweise, kreisförmigen Ringwulst (15) aufweist, an dem mehrere C-förmige Klammern (30) mit je einer Druckschraube (31) als Klemmorgan (3) sich verschieb- und lösbar formschlüssig halten, die im Betriebszustand auf die auf dem Flansch (12) des Kragens (1) aufliegende Randpartie des planen, plattenförmigen Deckels (2) drücken.

2. Verschluss nach Anspruch 1, dadurch gekennzeichnet, dass der Kragen (1) ein am Behälter anschweissbarer Ring ist.

3. Verschluss nach Anspruch 1, dadurch gekennzeichnet, dass der Kragen (1) ein auf dem Behälter aufschraubbarer Ring (10) ist.

4. Verschluss nach Anspruch 1, dadurch gekennzeichnet, dass der plane Deckel (2) am Umfang gleichmässig verteilte, bezüglich der Oberfläche vertiefte Druckflächen (21) mit napfförmigen Aufnahmen (22) für die Druckschrauben (31) der Klemmorgane (3) aufweist.

5. Verschluss nach Anspruch 1, dadurch gekennzeichnet, dass die Randpartie des Deckels (2) eine umlaufende Positionierungsnut (26) aufweist, in die im Betriebszustand ein formschlüssig zentrischer, ringförmiger Steg (14), der über die Dichtfläche (13) des Dichtflansches (12) am Kragen (1) vorsteht, eingreift.

6. Verschluss nach Anspruch 5, dadurch gekennzeichnet, dass der ringförmige Steg (14) auf dem Flansch (12) bezüglich der Innenkante um mindestens die Breite einer im Querschnitt halbkreisförmigen Nut (18) nach innen versetzt angeordnet ist und dass in der Nut eine O-Ringdichtung (5) eingelegt ist.

7. Verschluss nach Anspruch 6, dadurch gekennzeichnet, dass an der Deckelunterseite eine im Querschnitt weniger als halbkreisförmige, umlaufende Nut (27) eingelassen ist, welche im Betriebszustand über der entsprechenden Nut (18) im Flansch (12) des Krages (1) liegt.

8. Verschluss nach Anspruch 1, dadurch gekennzeichnet, dass im oberen Schenkel (32) der C-förmigen Klammer (30) des Klemmorganes (3) ein Gewindeloch vorgesehen ist, während der untere Schenkel (33) ein den Ringwulst (15) umgreifendes Maul (36) aufweist, wobei die Zentrumsachse des Gewindeloches das Maul im unteren Schenkel mittig schneidet.

9. Verschluss nach Anspruch 1, dadurch gekennzeichnet, dass das Klemmorgan (3) mit einem das Maul (36) der C-förmigen Klammer (30) begrenzenden Stift (37) versehen ist, der den Formschluss des Maules um den Ringwulst (15) um mehr als 180° bewirkt.

10. Verschluss nach Anspruch 1, dadurch gekennzeichnet, dass der Deckel (2) mit dem Kragen (1) über ein Scharnier (4) verbunden ist.

11. Verschluss nach Anspruch 9, dadurch gekennzeichnet, dass das Scharnier durch ein Klemmorgan (3) gebildet ist, dessen die beiden Schenkel der C-förmigen Klammer (30) verbindende Teile getrennt und über eine Schwenkachse (41) verbunden sind.

12. Verschluss nach Anspruch 10, dadurch gekennzeichnet, dass die Schwenkachse (41) aus einer Passschraube geformt ist, die von einer Spiraldruckfeder (46) umgeben ist.

## Claims

1. Closure for pressure vessels, comprising a collar (1) connectable to the pressure vessel and a cover (2), as well as a seal (5) located in the bearing area between the cover and the collar and several clamping members (3) for producing the surface pressure between the collar and the cover, characterized in that onto the collar is shaped in one piece a sealing flange (12), which has an upper, planar sealing face (13) and a lower, all-round, cross-sectionally at least partly circular bead (15), onto which are displaceably and detachably positively held several C-clamps (30) with in each case a clamping nut (31) as the clamping member (3) and which in the operating state press onto the marginal portion of the planar, plate-like cover (2) resting on the flange (12) of the collar.

2. Closure according to claim 1, characterized in that the collar (1) is a ring weldable to the vessel.

3. Closure according to claim 1, characterized in that the collar (1) is a ring (10) which can be screwed onto the vessel.

4. Closure according to claim 1, characterized in that the planar cover (2) has circumferentially uniformly distributed pressure faces (21), which are depressed with respect to the surface and having cup-shaped receptacles (22) for the clamping nuts (31) of the clamping members (3).

5. Closure according to claim 1, characterized in that the marginal portion of the cover (2) has an all-round positioning groove (26), in which engages in the operating state a positively central, circular web (14), which projects over the sealing face (13) of the sealing flange (12) on the collar (1).

6. Closure according to claim 5, characterized in that the circular web (14) on the flange (12) is inwardly displaced with respect to the inner edge at least by the width of a cross-sectionally semicircular groove (18) and that an O-ring (5) is placed in the groove.

7. Closure according to claim 6, characterized in that on the underside of the cover is formed a cross-sectionally less than semicircular, all-round groove (27), which in the operating state is positioned above the corresponding groove (18) in the flange (12) of the collar (1).

8. Closure according to claim 1, characterized in that in the upper leg (32) of the C-clamp (30) of the clamping member (3) is provided a taphole, whereas the lower leg (3) has a mouth (36) engaging round the bead (15), the centre axis of the taphole centrally intersects the mouth in the lower leg.

9. Closure according to claim 1, characterized in that the clamping member (3) is provided with a pin (37) bounding the mouth (36) of the C-clamp (30) and which brings about the self-closure of the mouth around the bead (15) by more than 180°.

10. Closure according to claim 1, characterized in that the cover (2) is connected to the collar (1) by means of a hinge (4).

11. Closure according to claim 9, characterized in that the hinge is formed by a clamping member (3), whose parts connecting the two legs of the C-clamp (30) are separated and connected by means of a pivot pin (41).

12. Closure according to claim 10, characterized in that the pivot pin (41) is formed by a reamed bolt, which is surrounded by a helical compression spring (46).

## Revendications

1. Dispositif de fermeture pour récipients sous pression, constitué d'un collet (1) pouvant être assemblé au récipient sous pression et d'un couvercle (2), ainsi que d'un joint d'étanchéité (5) disposé dans la région d'appui entre le couvercle et le collet et de plusieurs organes de serrage (3) pour produire la pression de surface entre le collet et le couvercle, **caractérisé** en ce qu'une bride d'étanchéité (12) est formée d'un seul tenant sur le collet, bride qui présente une face d'étanchéité supérieure plane (13) et un bourrelet annulaire entourant inférieur (15), de forme de section au moins partiellement circulaire, sur lequel se maintiennent, avec possibilité de déplacement et de démontage, plusieurs attaches en forme de C (30) pourvues chacune d'une vis de pression (31) comme organe de serrage (3), attaches qui, à l'état de service, exercent une pression sur la partie de bord, du couvercle plan en forme de plaque (2), qui repose sur la bride (12) du collet (1).

2. Dispositif de fermeture selon la revendication 1, **caractérisé** en ce que le collet (1) est une bague qui peut être soudée sur le récipient.

3. Dispositif de fermeture selon la revendication 1, **caractérisé** en ce que le collet (1) est une bague (10) qui peut être vissée sur le récipient.

4. Dispositif de fermeture selon la revendication 1, **caractérisé** en ce que le couvercle (2) présente des faces de pression (21) uniformément réparties sur la circonférence et en renfoncement par rapport à la surface, pourvues de logements en forme de cuvettes (22) pour les vis de pression (31) des organes de serrage (3).

5. Dispositif de fermeture selon la revendication 1, **caractérisé** en ce que la partie de bord du couvercle (2) présente une rainure de positionnement entourante (26) dans laquelle s'engage, à l'état de service, une nervure annulaire (14), centrée par engagement positif, qui dépasse de la face d'étanchéité (13) de la bride d'étanchéité (12) sur le collet (1).

6. Dispositif de fermeture selon la revendication 5, **caractérisé** en ce que la nervure annulaire (14) est disposée sur la bride (12) en étant décalée, par rapport au bord intérieur, au moins de la largeur d'une rainure (18) de section semi-circulaire, et en ce qu'un joint torique d'étanchéité (5) est inséré dans la rainure.

7. Dispositif de fermeture selon la revendication 6, **caractérisé** en ce qu'une rainure entourante (27) de section moins que semi-circulaire est pratiquée sur le dessous du couvercle, rainure qui, à l'état de service, se trouve au-dessus de la rainure correspondante (18) pratiquée dans la bride (12) du collet (1).

8. Dispositif de fermeture selon la revendication 1, **caractérisé** en ce qu'un trou fileté est prévu dans la branche supérieure (32) de l'attache en forme de C (30) de l'organe de serrage (3), tandis que la branche inférieure (33) présente un mors (36) s'engageant autour du bourrelet annulaire (15), l'axe central du trou fileté coupant en son milieu le mors de la branche inférieure.

9. Dispositif de fermeture selon la revendication 1, **caractérisé** en ce que l'organe de serrage (3) est pourvu d'une goupille (37) qui limite le mors (36) de l'attache en forme de C (30) et produit un engagement positif du mors sur plus de 180° autour du bourrelet annulaire (15).

10. Dispositif de fermeture selon la revendication 1, **caractérisé** en ce que le couvercle (2) est relié au collet (1) par l'intermédiaire d'une charnière (4).

11. Dispositif de fermeture selon la revendication 9, **caractérisé** en ce que la charnière est formée par un organe de serrage (3) dont les parties reliant les deux branches de l'attache en forme de C (30) sont séparées et reliées entre elles au moyen d'un axe de pivotement (41).

12. Dispositif de fermeture selon la revendication 10, **caractérisé** en ce que l'axe de pivotement (41) est formé par une vis d'ajustement qui est entourée par un ressort de pression spiral (46).
